# EUROPÄISCHE PATENTSCHRIFT

(11) **EP 0 698 760 B1**
(45) Veröffentlichungstag und Bekanntmachung des Hinweises auf die Patenterteilung: **30.06.1999**
(21) Anmeldenummer: 95112809.9
(22) Anmeldetag: 16.08.1995
(51) Int. Cl.: F16K 27/00, F16K 31/50

(54) **Elektrische Trennstelle für Rohrleitungsarmaturen**
Electrical sectionning point for accoutrements
Point de sectionnement pour raccorderie

(30) Priorität: 27.08.1994 DE 4430508
(43) Veröffentlichungstag der Anmeldung: 28.02.1996
(73) Patentinhaber: Mittelmann Armaturen GmbH + Co. KG, D-42489 Wülfrath (DE)
(72) Erfinder: Cremer, Thomas, D-42489 Wülfrath (DE)
(74) Vertreter: Manderla, Thomas, Dr.

(56) Entgegenhaltungen:
- DE-B- 1 205 787
- FR-A- 2 079 797
- FR-A- 2 129 279
- US-A- 5 020 934

## Beschreibung

Die Erfindung betrifft ein Absperr- und Regelorgan, das in im Erdreich verlegten und kathodisch korrosionsgeschützten Rohrleitungen einbaubar ist und unter anderem ein Gehäuse mit daraus austretender Spindel, eine Einbaugarnitur und eine elektrische Trennstelle aufweist, wobei der Anschluß der Einbaugarnitur am Gehäuse wasserdicht gekapselt ist.

Rohrleitungen aus elektrisch leitenden, insbesondere aus metallischen Werkstoffen wie Stahl oder Guß unterliegen bei Verlegung im Erdreich Korrosionsangriffen. Dieses Problem tritt verstärkt auf in Bereichen mit elektrischem Schienenbahnverkehr und bei der Verlegung in aggressiven Böden. Um diesem Umstand zu begegnen, werden die Rohrleitungen mit einem sogenannten kathodischen Korrosionsschutz geschützt. Dieses Verfahren bedeutet, daß die entsprechenden Leistungssysteme mit einem Strom beaufschlagt werden.

An ungeschützten Übergangsstellen des Rohrleitungssystems zum Erdreich, d. h. insbesondere im Bereich in die Rohrleitung eingebauter Armaturen, entsteht dadurch, daß der Schutzstrom ins Erdreich entweichen kann, ein sehr starker Materialabtrag, der Bauteile zum Teil unbrauchbar machen kann. Des weiteren stellt der Energieabfluß in solchen ungeschützten Rohrleitungsteilen ein technisches Problem dar.

Die im Erdreich eingebauten Armaturen sind in der Regel von Grund- oder Sickerwasser umgeben oder haben teilweise auch direkten Kontakt mit dem Erdreich. Diesem Umstand wird normalerweise durch entsprechende isolierende Schutzbeschichtung der Armaturengehäuse Reclmung getragen, so daß die Armaturengehäuse selbst gegenüber dem Erdreich bzw. dem Umgebungswasser isoliert sind. Dies trifft nicht zu auf aus dem Gehäuse austretende Spindeln, beispielsweise Spindelköpfe. Da beim Einbau solcher Armaturen in im Erdreich verlegten Rohrleitungen mit sog. Einbaugarnituren der Abstand des Einbauortes von der Erdoberfläche überbrückt wird, trifft die isolierende Schutzbeschichtung auch nicht für die Betätigungsgestänge zu, da die die Einbauarmaturen umgebenden Schutzhüllen nicht oder nur mit sehr großem Aufwand wasserdicht ausgestattet werden können.

Aus der FR-A-2 079 797 ist ein kathodisch korrosionsgeschützter Schieber bekannt , bei dem als elektrische Trennstelle die gesamte Armatur einschließlich eines Teils der Rohrleitung und des Anschlusses des Bedienungsgestänges mit weichem, wasserfestem und elektrisch nichtleitendem Material umgossen werden. Dies hat den Nachteil, nicht nur aufwendig und sperrig zu sein, sondern auch die Zugänglichkeit zu behindern, wenn nicht gar praktisch unmöglich zu machen.

Das der Erfindung zugrundeliegende technische Problem ist es, die Betätigungsorgane für Absperr- und Regelorgane derart auszugestalten, daß die elektrische Trennstelle und die wasserdichte Kapselung mit einfachen, platzsparenden Mitteln realisiert wird und vor allem die Zugänglichkeit der Armatur gewährleistet bleibt.

Dieses technische Problem wird bei gattungsgemäßen Absperr- und Regelorganen gemäß den kennzeichnenden Merkmalen von Anspruch 1 gelöst.

Dabei ist vorgesehen, daß die austretende Spindel gegen die auf sie gesetzte Verbindungsmuffe elektrisch isoliert ist. Dies hat den Vorteil, daß herkömmliche Armaturen auch weiterhin eingesetzt werden können, während eine Lösung, bei der die aus dem Organgehäuse austretende Spindel innerhalb des Gehäuses elektrisch gegen die mit der Rohrleitung und damit dem Schutzstrom in Verbindung stehenden Teile isoliert wird, in der Regel die Um- oder Neukonstruktion der entsprechenden Organe erforderlich machen würde.

Die wasserdichte Ausgestaltung des Anschlusses der Einbaugarnituren an das Absperr- und Regelorgan durch entsprechende Ausbildung der Verbindung des die Verbindungsmuffe umgebenden Rohrs und des Ringspaltes zwischen Rohr und Verbindungsmuffe hat den Vorteil, daß bisher bekannte Vorrichtungen durch relativ einfache und wenig aufwendige Änderungen auch erfindungsgemäß weiter eingesetzt werden können.

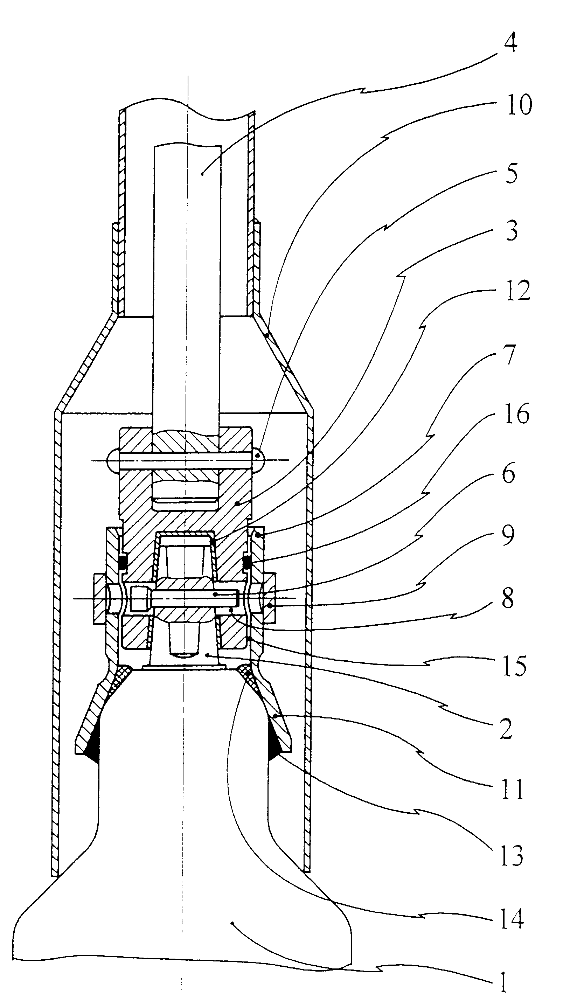

Weitere Vorteile ergeben sich aus der Beschreibung der Zeichnung, in der ein Ausführungsbeispiel zur elektrischen Trennung und wasserdichten Kapselung eines Schieberkopfes dargestellt ist, die nachfolgend näher beschrieben wird.

In der Zeichnung ist dargestellt das Oberteil einer Schieberglocke 1, die für den Einbau im Erdreich PUR-beschichtet ist. Aus ihr tritt der Spindelkopf 2 aus, der an seiner Basis einen runden Querschnitt aufweist und nach oben zu einem Pyramidenstumpf mit quadratischem Querschnitt verjüngt ist. Hierauf ist die Verbindungsmuffe 3 aufgesetzt, in die der Fuß der Betätigungsstange 4 hineinreicht, die in der Verbindungsmuffe durch einen Niet 5 gesichert ist.

Auf der oberen Schieberglocke 1 ist ein Polyamid-Rohr 7 befestigt, das in seinem unteren Bereich 11 eine glockenförmige konische Aufweitung aufweist. In der Verbindungsmuffe 3 sowie in dem sie mit einem Ringspalt 15 umgebenden Rohr 7 ist eine Bohrung 8 zur Aufnahme eines Stiftes 6 vorgesehen. Die Bohrungsaustrittsöffnungen werden durch einen um das Rohr 7 gelegten Ring 9 geschlossen. Die gesamte Einbaugarnitur, die im dargestellten Fall aus der Betätigungsstange 4, der Verbindungsmuffe 3 und dem Rohr 7 besteht, wird durch eine Schutzhülle 10 umgeben, die zweckmäßigerweise aus PE besteht. Die gesamte Einbaugarnitur ist in Bezug auf die Spindelachse zentrisch montiert.

Im dargestellten Ausführungsbeispiel ist die elektrische Trennstelle durch eine Auskleidung des im unteren Teil der Verbindungsmuffe für die Aufnahme des Spindelkopfes ausgesparten Raumes mit einem elektrisch isolierenden Material 12, im Beispiel durch ein PE-Flachmaterial vorgesehen.

Parallel dazu wird der Anschluß der Einbaugarnitur an die Schieberglocke 1 durch das Vorsehen eines O-Rings 16 im Ringspalt 15 zwischen Verbindungsmuffe 3 und Rohr 7 sowie durch die Anordnung einer wasserdichten Verklebung 14 und Dichtung 13 zwischen Schieberglocke 1 und Rohr 7 erreicht. Die Dichtstelle 13 wird vorteilhaft aus Kebutyl-Kautschuk hergestellt, da hierdurch die Unebenheiten der PUR-Beschichtung der Schieberglocke 1 ausgeglichen werden können. Vorteilhaft wird die Klebung 14 mit einem flüssig aufzutragenden Kleber vorgesehen, wodurch die Zentrierung des Rohres 7 nach dem Aushärten des Klebers erleichtert wird. Vorteilhaft wird der Stift 6, der die Einbaugarnitur gegen ein Herausheben nach oben sichert, aus nicht leitendem Polyamid sowie der Ring 9 aus Kebutyl-Kautschuk vorgesehen.

## Patentansprüche

1. Absperr- und Regelorgan, das in im Erdreich verlegten und kathodisch korrosionsgeschützten Rohrleitungen einbaubar ist und unter anderem ein Gehäuse (1) mit daraus austretender Spindel (2), eine Einbaugarnitur (3, 4, 7) und eine elektrische Trennstelle (12) aufweist, wobei der Anschluß der Einbaugarnitur (3, 4, 7) am Gehäuse (1) wasserdicht gekapselt ist,
**dadurch gekennzeichnet,** daß
die Einbaugarnitur ein Betätigungsgestänge (4), eine Verbindungsmuffe (3) und ein Rohr (7) aufweist, daß als elektrische Trennstelle eine Isolierung (12) aus elektrisch nichtleitendem Material zwischen der Spindel (2) und der sie umschlileßenden Verbindungsmuffe (3) vorgesehen ist, und daß zur wasserdichten Kapselung des Anschlusses der Einbaugarnitur (3, 4, 7) am Gehäuse (1) der untere Teil der Verbindungsmuffe (3) und der obere Teil des Gehäuses (1) von dem Rohr (7) umgeben sind.

2. Absperr- und Regelorgan gemäß Anspruch 1, dadurch gekennzeichnet, daß die Verbindungsmuffe (3) aus elektrisch nichtleitendem Material besteht.

3. Absperr- und Regelorgan gemäß Anspruch 1 oder 2, dadurch gekennzeichnet, daß die wasserdichte Kapselung nach unten zwischen dem Rohr (7) und dem Gehäuse (1) durch eine wasserdichte Verklebung (14) und/oder Dichtung (13) und nach oben im Ringspalt (15) zwischen Verbindungsmuffe (3) und Rohr (7) durch einen O-Ring (16) gegeben ist.

4. Absperr- und Regelorgan gemäß Anspruch 3, dadurch gekennzeichnet, daß der O-Ring (15) in einer umlaufenden Nut der Verbindungsmuffe (3) angeordnet ist.

## Claims

1. A shutting-off and controlling element which can be fitted into cathodically corrosion-protected pipes laid in the ground and which has, inter alia, a housing (1) with a spindle (2) issuing therefrom, mounting fittings (3, 4, 7) and an electrical separation point (12), the connection of the mounting fittings (3, 4, 7) to the housing (1) being encapsulated in a water-tight manner, characterised in that the mounting fittings have an operating rod-linkage (4), a connection sleeve (3) and a tube (7), in that insulation (12) of an electrically non-conducting material is provided between the spindle (2) and the surrounding connection sleeve (3) as an electrical separation point, and in that the lower part of the connection sleeve (3) and the upper part of the housing (1) are surrounded by the tube (7) for the purpose of water-tight encapsulation of the connection of the mounting fittings (3, 4, 7) to the housing (1).

2. A shutting-off and controlling element in accordance with Claim 1, characterised in that the connection sleeve (3) is composed of electrically non-conducting material.

3. A shutting-off and controlling element in accordance with Claim 1 or 2, characterised in that the water-tight encapsulation is produced downwards between the tube (7) and the housing (1) by water-tight agglutination (14) and/or sealing (13) and upwards in the annular clearance (15) between the connection sleeve (3) and the tube (7) by an O-ring (16).

4. A shutting-off and controlling element in accordance with Claim 3, characterised in that the O-ring (15) is arranged in a circumferential groove in the connection sleeve (3).

## Revendications

1. Organe d'arrêt et de réglage qui peut être inséré dans des tuyauteries posées dans la terre et protégées cathodiquement contre la corrosion et présente entre autre un boîtier (1) dont sort une tige (2), une garniture de montage (3, 4, 7) et un point de sectionnement électrique (12), le raccordement de la garniture de montage (3, 4, 7) au boîtier (1) étant encapsulé de manière étanche à l'eau,
caractérisé en ce que la garniture de montage présente une tringlerie d'actionnement (4), un manchon de liaison (3) et un tube (7), en ce qu'une isolation (12) en matériau non électriquement conducteur est disposé, entre la tige (2) et le manchon de liaison (3) qui l'entoure, en tant que point de sectionnement électrique et en ce que, pour l'encapsulage étanche à l'eau du raccordement de la garniture de montage (3, 4, 7) au boîtier (1), la partie inférieure du manchon de liaison (3) et la partie supérieure du boîtier (1) sont entourés par le tube (7).

2. Organe d'arrêt et de réglage selon la revendication 1,
caractérisé en ce que le manchon de liaison (3) est constitué d'un matériau non électriquement conducteur.

3. Organe d'arrêt et de réglage selon la revendication 1 ou 2,
caractérisé en ce que l'encapsulage étanche à l'eau est formé, vers le bas, entre le tube (7) et le boîtier (1), par un lutage (14) et/ou un étoupage (13) étanches à l'eau et, vers le haut, dans la fente annulaire (15) entre le manchon de liaison (3) et le tube (7) par un joint torique (16).

4. Organe d'arrêt et de réglage selon la revendication 3,
caractérisé en ce que le joint torique (16) est disposé dans une rainure continue du manchon de liaison (3).
